# EUROPEAN PATENT APPLICATION

(11) **EP 4 321 393 A1**
(43) Date of publication of application: **14.02.2024**
(21) Application number: 22784528.6
(22) Date of filing: 24.03.2022
(51) Int. Cl.: B60R 21/18, B60R 21/207

(54) **OCCUPANT RESTRAINT DEVICE AND PRODUCTION METHOD FOR OCCUPANT RESTRAINT DEVICE**

(30) Priority: 09.04.2021 JP 2021066810
(71) Applicant: Autoliv Development AB, 44783 Vargarda (SE)
(72) Inventor: MATSUSHITA, Tetsuya, Yokohama-shi, Kanagawa 222-8580 (JP)
(74) Representative: Müller Verweyen
(86) International application number: PCT/JP2022/014002
(87) International publication number: WO 2022/215543

(57) **Abstract**

[Problem] To provide a passenger restraining device capable of further improving passenger restraining performance of an airbag cushion.

[Resolution Means] A passenger restraining device 100 is provided with an airbag cushion 112 stored in a seatback 104 in a predetermined storage form, an inflator 120, and a first belt 116a and a second belt 116b connected to the side of the airbag cushion 112 opposite to the passenger 103 and stored from the inside of the seatback 104 to the inside of a seat cushion 106. The second belt 116b is disposed behind the first belt 116a on the side of the expanded and deployed airbag cushion 112 opposite to the passenger. In a stored state in which the airbag cushion 112 in a storage form is assembled on a frame 122, the first belt 116a is disposed so as to be located farther from the frame 122 than the second belt 116b.

## Description

### TECHNICAL FIELD

The present invention relates to a passenger restraining device that restrains a passenger seated in a seat of a vehicle.

### BACKGROUND ART

Airbag devices have generally become standard equipment in vehicles in recent years. An airbag device is a safety device which is operated in the event of an emergency such as a vehicle collision, retaining and protecting passengers utilizing an airbag cushion which expands and deploys based on gas pressure. There are various types of airbag devices depending on the installation site and application. For example, in the passenger restraining device of patent document 1 filed by the present applicant, there is a side airbag device in which an airbag cushion expands and deploys from a side part of a seat to both flanks of a passenger.

The passenger restraining device of patent document 1 is provided with a belt 140 that spreads out as the airbag cushion is expanded and deployed. The belt 140 utilizes tension to restrict movement of the airbag cushion and enable increased passenger restraining performance of the airbag cushion.

### RELATED ART DOCUMENTS

### Patent Documents

[Patent Document 1] WO 2016/039160 Pamphlet

### SUMMARY OF THE INVENTION

### PROBLEM TO BE SOLVED BY THE INVENTION

In the passenger restraining device of patent document 1, movement of the airbag cushion in a direction away from the passenger, particularly in a lateral direction, can be suitably restricted by the belt, and the passenger restraining performance of the airbag cushion is remarkably enhanced. However, improvements in passenger restraining performance are always sought in such passenger restraining devices. Therefore, the present inventors have studied further improvement of the art disclosed in patent document 1.

In view of such problems, an object of the present invention is to provide a passenger restraining device capable of further improving passenger restraining performance of an airbag cushion and a method for manufacturing the passenger restraining device.

### MEANS FOR SOLVING THE PROBLEM

In order to solve the foregoing problem, a representative configuration of the passenger restraining device according to the present invention is a passenger restraining device for restraining a passenger seated on a seat of a vehicle, provided with: an airbag cushion that has a bag shape, is assembled on a frame on at least one end side in a width direction of a seatback of the seat in a rolled or folded predetermined storage form, and is expanded and deployed in front of the seated passenger; an inflator assembled on the frame together with the airbag cushion having at least a portion inserted into the airbag cushion; and a first belt and a second belt connected to a side of the airbag cushion opposite to the passenger and stored from the inside of the seatback to the inside of the seat cushion, wherein the second belt is disposed so as to be positioned behind the first belt on the surface on the opposite side of the airbag cushion when the airbag cushion is expanded and deployed, and in a state where the airbag cushion in the storage form is assembled on the frame, the first belt is disposed so as to be positioned farther from the frame than the second belt.

According to the foregoing configuration, the airbag cushion is supported from a side opposite to the passenger by the first belt and the second belt, and the passenger restraining performance of the airbag cushion can be improved by utilizing tensions of the first belt and the second belt.

When the foregoing inflator is assembled on an outer side of the frame in the width direction, the first belt may be disposed so as to be positioned farther toward the outer side in the width direction than the second belt.

The foregoing configuration too is able to support the airbag cushion by utilizing the tensions of the first belt and the second belt and to improve the passenger restraining performance of the airbag cushion.

When the foregoing inflator is assembled on the front end of the frame, the first belt may be disposed so as to be positioned in front of the second belt.

The foregoing configuration too is able to support the airbag cushion by utilizing the tensions of the first belt and the second belt and to improve the passenger restraining performance of the airbag cushion.

The airbag cushion may be provided on each of one end side and another end side in the width direction of the seatback. According to this configuration, the passenger can be protected from both left and right sides via a high restraining force.

In the foregoing airbag cushion in the storage form, a portion of the airbag cushion in front of the first belt may be folded back to the outside of the first belt. This configuration allows the airbag cushions to be efficiently stored in the seatback.

In the foregoing airbag cushion in the storage form, a portion of the airbag cushion in front of the first belt may be folded into the inside of a portion behind the first belt. This configuration also enables efficient storage of the airbag cushion inside the seatback.

In the airbag cushion in the storage form, a portion of the airbag cushion between the second belt and the first belt may be folded toward the outside of the second belt in the width direction of the seatback.

The foregoing configuration also enables efficient storage of the airbag cushion inside the seatback. Furthermore, when the airbag cushion is unfolded by an inflow of gas, a portion of the airbag cushion in front of the second belt moves toward the passenger. Therefore, the passenger restraining performance of the airbag cushion can be further improved.

In the foregoing airbag cushion in the storage form, all or part of the first belt may overlap the second belt in the width direction of the seatback. This configuration also enables efficient storage of the airbag cushion inside the seatback.

In the airbag cushion in the storage form, a portion in front of the second belt may be folded into a portion behind the second belt. This configuration also enables efficient storage of the airbag cushion inside the seatback.

The first belt and the second belt may be connected to the airbag cushion so as to be capable of sliding. This configuration enables the airbag cushion to be more smoothly expanded and deployed.

The airbag cushion may include a main chamber that is supported by both the first belt and the second belt from a side opposite to the passenger when the airbag cushion is expanded and deployed and a sub-chamber that is positioned on the passenger side of the main chamber when the airbag cushion is expanded and deployed and overlaps the first belt when viewed in the width direction of the seatback.

The thickness of the front side of the airbag cushion of the foregoing configuration increases due to the sub-chamber, and thus the airbag cushion can be expanded and deployed until being in front of the upper half of the body of the passenger and can restrain the passenger from the front.

The airbag cushion may have a sewn part joining a panel of the main chamber and a panel of the sub-chamber. This configuration allows the sub-chamber to be disposed so as to overlap the front side of the main chamber.

In order to solve the above problem, a representative configuration of the manufacturing method of a passenger restraining device according to the present invention is a method for manufacturing a passenger restraining device for restraining a passenger seated on a seatback of a vehicle by an airbag cushion which has a bag shape, is stored in at least one end side in the width direction of the seatback in a rolled or folded predetermined storage form, and is expanded and deployed up to the front of the passenger seated in the seat, the method being provided with: a process for connecting a first belt and a second belt stored from the inside of the seatback to the inside of the seat cushion to the opposite side of the passenger of the airbag cushion, thereupon connecting the second belt to a location behind the first belt of the airbag cushion, and by the connection, positioning the first belt further outward in the width direction of the seatback than the second belt; a process for folding a portion of the airbag cushion between the second belt and the first belt to the outside of the second belt in the width direction of the seatback; a process for folding the portion of the airbag cushion in front of the first belt to an outer side of the first belt or a process for folding the portion in front to the inside of the portion behind the first belt; a process for overlapping an entirety or a portion of the first belt on the second belt seen from the width direction of the seatback; and a process for folding a portion of the airbag cushion in front of the second belt in to an inside of a portion behind the second belt.

According to the foregoing configuration, it is possible to realize a storage form of the airbag cushion that can be efficiently stored in the seatback, and it is possible to realize a passenger restraining device having high passenger restraining performance utilizing the tensions of the first belt and the second belt.

### EFFECT OF THE INVENTION

According to the present invention, it is possible to provide a passenger restraining device capable of further improving passenger restraining performance of an airbag cushion and a method for manufacturing the passenger restraining device.

### BRIEF DESCRIPTION OF THE DRAWINGS

[FIG. 1] A diagram illustrating an example of a pre-activation state of the passenger restraining device according to the present embodiment.
[FIG. 2] A view illustrating an example of a post-activation state of the passenger restraining device in FIG. 1.
[FIG. 3] A diagram illustrating an example of the airbag unit in FIG. 2(b) while placed on a flat surface.
[FIG. 4] A diagram of the passenger restraining device in FIG. 2 as viewed from above.
[FIG. 5] A cross-sectional view of the airbag cushion in the storage form in FIG. 1 along A-A.
[FIG. 6] A diagram illustrating an example of a process for folding the airbag cushion in the storage form in FIG. 5.
[FIG. 7] A diagram illustrating an example of a modified example of the airbag cushion in the storage form in FIG. 5.
[FIG. 8] A diagram illustrating an example of a first modified example of the airbag unit in FIG. 3.
[FIG. 9] A diagram illustrating an example of a second modified example of the airbag unit in FIG. 3.
[FIG. 10] A diagram illustrating an example of a passenger restraining device applying the airbag unit in FIG. 9(a).
[FIG. 11] A diagram illustrating an example of a third modified example of the airbag unit in FIG. 3.
[FIG. 12] A diagram illustrating an example of a passenger restraining device applying the airbag unit in FIG. 10(a).
[FIG. 13] A diagram illustrating an example of a fourth modified example of the airbag unit in FIG. 1.
[FIG. 14] A cross-sectional view of the airbag unit in FIG. 13(a) along F-F.

### DESCRIPTION OF THE PREFERRED EMBODIMENTS

Preferred Embodiments according to the present invention will hereinafter be described in detail with reference to the attached drawings. Dimensions, materials, other specific numerical values, and the like indicated in the Embodiments are merely examples for ease of understanding of the invention and do not limit the present invention unless otherwise noted. Note that in the present specification and drawings, elements having essentially identical functions and configurations are labeled with identical symbols in order to omit redundant descriptions along with an illustration of elements not directly related to the present invention.

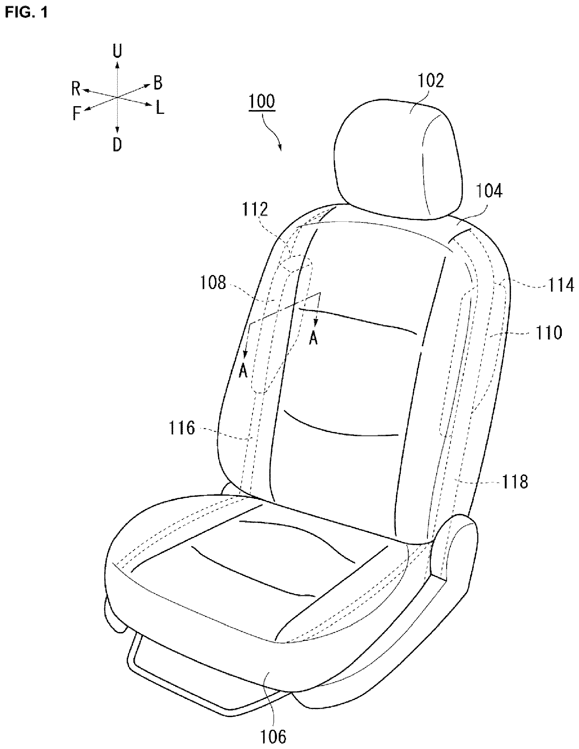

FIG. 1 is a diagram illustrating an example of a pre-activation state of a passenger restraining device 100 according to the present embodiment. In FIG. 1, members stored in a seat 102, such as airbag cushions 108 and 110, are indicated by imaginary lines.

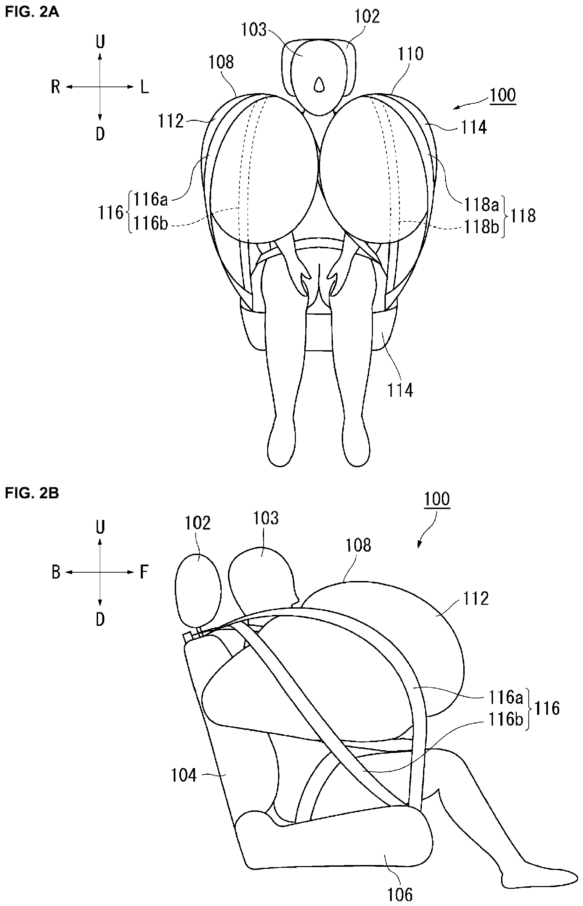

In the present embodiment, when a passenger 103 (see FIG. 2 and the like) is seated in a regular posture in the seat, the direction in which the passenger 103 faces is referred to as the front direction, the opposite direction is referred to as the back direction, the right hand side of the passenger 103 is referred to as the right direction, and the left hand side of the passenger 103 is referred to as the left direction. Furthermore, when the passenger 103 is seated in a regular posture, the direction towards the head of the passenger 103 is referred to as up, and the direction towards the legs of the passenger 103 is referred to as down. Also, in the drawings used in the description below, as necessary, the front, back, left, right, up, and down directions with reference to the passenger 103 described above are illustrated by arrows F (Forward), B (Back), L (Left), R (Right), U (up), and D (down).

In addition, for the directions referred to as inner side and outer side in the description below, in the relative positional relationship of the plurality of objects seen from the passenger 103 seated in the normal posture, the side near the passenger 103 is referred to as the inner side and the side far from the passenger 103 is referred to as the outer side.

The passenger restraining device 100 includes a pair of left and right airbag units 108 and 110 mainly inside a seatback 104 of a seat. The airbag units 108 and 110 are configured including airbag cushions 112 and 114 and belt members 116 and 118, respectively.

The passenger restraining device 100 restrains a passenger 103 (see FIG. 2 and the like) seated on a seat 102 in an emergency such as a case where a vehicle undergoes an impact, mainly by utilizing the airbag cushions 112 and 114. The airbag cushions 112 and 114 are bag-shaped members that can be expanded by gas, and are stored inside both end sides of the seatback 104 of the seat 102 in a small, collected storage form by rolling or folding.

In the present embodiment, the belt members 116 and 118 are provided for the pair of airbag cushions 112 and 114, respectively. The belt members 116 and 118 are stored from the inside of the seatback 104 to the inside of the seat cushion 106 of the seat 102.

FIG. 2 is a view illustrating an example of a post-activation state of the passenger restraining device 100 in FIG. 1. FIG. 2(a) illustrates the passenger restraining device 100 as viewed from the front of the seat 102. The passenger 103 in FIG. 2(a) is illustrated as a test dummy doll AM50 which imitates a physique (height of 175 cm and weight of 78 kg) suitable for 50% of average US adult males.

In the passenger restraining device 100 of the present embodiment, the pair of left and right airbag cushions 112 and 114 are expanded and deployed on both sides of the passenger 103 seated on the seat 102 at the time of a vehicle collision or the like. At this time, the airbag cushions 112 and 114 are supported from the side opposite to the passenger 103 by the belt members 116 and 118, respectively, increasing the passenger restraining force. The airbag cushions 112 and 114 and the belt members 116 and 118 have the same symmetrical configuration.

FIG. 2(b) is a diagram illustrating an example of the passenger restraining device 100 as viewed from the right side of the seat 102 in FIG. 2(a). The belt member 116 is given as an example representative of the belt members 116 and 118. The belt member 116 is deployed externally to the seat 102 together with the airbag cushion 112 due to the airbag cushion 112 expanding and tearing the skin of the seat 102. The belt member 116 is connected to a panel of the airbag cushion 112 on a side opposite to the passenger 103, and becomes stretched from the seatback 104 to the seat cushion 106.

The belt member 116 is configured from two belts. For example, the belt member 116 includes a first belt 116a on the front side and a second belt 116b on the back side. Similarly, the belt member 118 (see FIG. 2(a) and the like) also includes a first belt 118a and a second belt 118b.

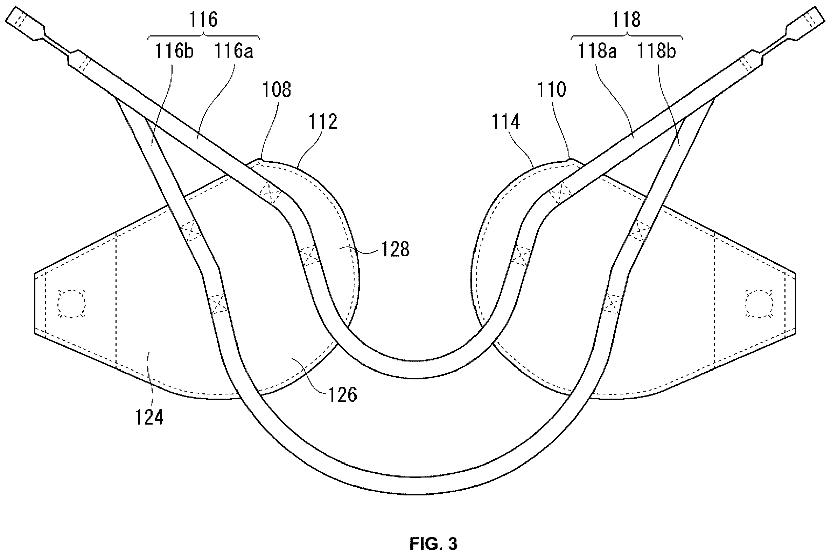

FIG. 3 is a diagram illustrating an example of the airbag units 108 and 110 in FIG. 2(b) while placed on a flat surface. In FIG. 3, the airbag cushions 112 and 114 are illustrated with the panel on the side opposite to the passenger 103 (see FIG. 2(b)) facing the viewer.

The airbag cushions 112 and 114 are bag-shaped members for catching the passenger 103 (see FIG. 2(b)) and are formed by overlapping, stitching, or otherwise adhering a plurality of base materials included on the surface thereof or weaving using OPW (one-piece woven).

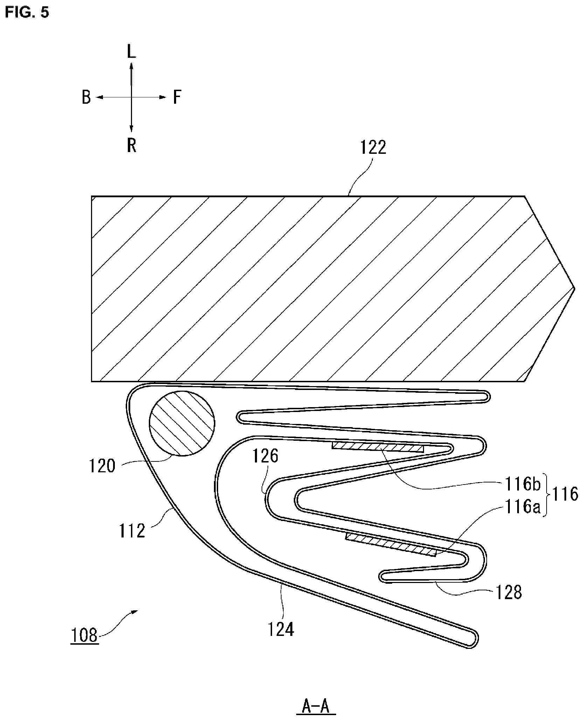

An inflator 120 (see FIG. 5) that is a gas generation device is provided on a back end side of an inner portion of the airbag cushion 112. Examples of currently prevailing inflators include: types which are filled with a gas generating agent and burn the agent to generate gas; types which are filled with compressed gas and supply gas without generating heat; hybrid types which utilize both combustion gas and compressed gas; and the like. Any type of inflator can be used as the inflator 120.

The first belt 116a is connected to a front part of the airbag cushion 112. The second belt 116b is connected to a portion of the airbag cushion 112 that is further behind the first belt 116a. The belt members 116 and 118 are configured such that the lower end sides of the first belts 116a and 118a and the lower end sides of the second belts 116b and 118b are contiguous.

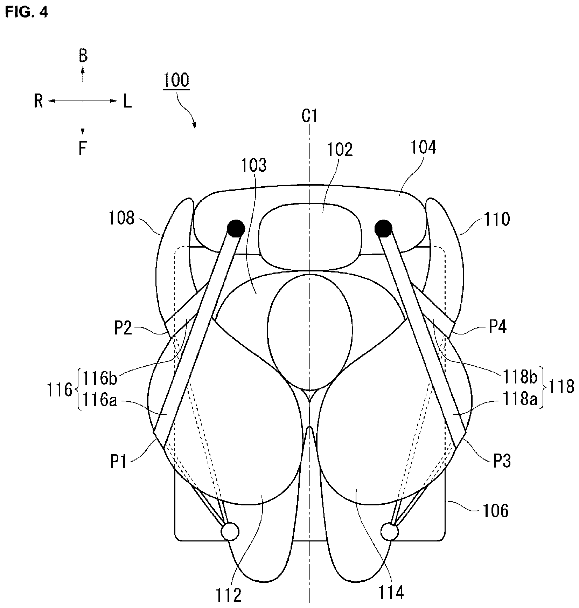

FIG. 4 is a diagram of the passenger restraining device 100 in FIG. 2 as viewed from above. The first belts 116a and 118a are disposed so as to be positioned in front of the second belts 116b and 118b on the surface of the airbag cushion 112 on the side opposite to the passenger 103 when the airbag cushion 112 is expanded and deployed. Conversely, the second belts 116b and 118b are disposed so as to be positioned farther behind the first belts 116a and 118a on the surface of the airbag cushion 112 on the side opposite to the passenger 103 when the airbag cushion 112 is expanded and deployed.

In the present embodiment, by providing two belts for each of the airbag cushions 112 and 114, the airbag cushions 112 and 114 are held at a plurality of locations, and movement of the airbag cushions 112 and 114 in directions away from the passenger 103 is restricted. In particular, in the present embodiment, the belt members 116 and 118 can be used to bias the airbag cushions 112 and 114 toward the passenger 103 and to absorb the load of the airbag cushions 112 and 114, and thus it is possible to further improve the passenger restraining performance of the airbag cushions 112 and 114.

In the passenger restraining device 100 of the present embodiment, when the airbag cushion 112 is expanded and deployed, a portion P1 of the first belt 116a that is positioned outermost in the width direction of the seatback 104 is positioned farther outside than an outermost portion P2 of the second belt 116b, with respect to a center C1 of the seatback 104 in the lateral direction. Similarly, when the airbag cushion 114 is expanded, an outermost portion P3 of the first belt 118a in the width direction of the seatback 104 is positioned farther outside than an outermost portion P4 of the second belt 116b.

According to the foregoing configuration, of the side surfaces on the side opposite to the passenger 103, the front side of the expanded and deployed airbag cushions 112 and 114 is held by the first belts 116a and 118a, and the back side thereof is held by the second belts 116b and 118b. The passenger restraining performance of the airbag cushion 112 can be further improved by utilizing the tensions of the first belts 116a and 118a and the second belts 116b and 118b. In particular, in the present embodiment, the airbag cushion 112 is installed both on one end side and another end side in the width direction of the seatback 104, and thus the passenger 103 can be protected from both the left and right sides with a high restraining force.

FIG. 5 is a cross-sectional view of the airbag cushion 112 in the storage form in FIG. 1 along A-A. A frame 122 illustrated in FIG. 5 is assumed to be a portion along the left and right side surfaces of the seatback 104 from among the internal frame of the seat 102 (see FIG. 1 and the like). In the present embodiment, an airbag unit 108 centered about the airbag cushion 112 is installed on an outer side of the frame 122 in the width direction of the seatback 104. However, the airbag unit 108 can also be assembled inside the frame 122.

In a state in which the airbag cushion 112 in a storage form is assembled on the frame 122, the first belt 116a is disposed so as to be located farther from the frame 122 than the second belt 116b. That is, the first belt 116a is disposed so as to be positioned closer to the front surface side than the second belt 116b in the airbag cushion 112 in the storage form.

According to the foregoing configuration, when the airbag cushion 112 is expanded and deployed as shown in FIG. 4, the first belt 116a can be exposed from the inside of the seatback 104 earlier than the second belt 116b. Then, the first belt 116a moves quickly to a position farther separated forward from the frame 112 than the second belt 116b, and can suitably support the airbag cushion 112.

The inflator 120 is of a cylinder type (cylindrical type) and is built into the longitudinal direction facing the vertical direction on the rear side of the inner part of the airbag cushion 112. A plurality of stud bolts (not illustrated) protrude from a body of the inflator 120, and the inflator 120 and the airbag cushion 112 are affixed to the seat 102 (see FIG. 1) by the stud bolts being fastened to the frame 122. As another example, a disc-type (disc-shaped) inflator may be employed.

In the present embodiment, a passenger restraining device that can efficiently be stored in the seatback 104 (see FIG. 1) and can exhibit high passenger restraining performance is realized by enabling folding of the airbag cushion 112.

Before describing how the airbag cushion 112 in FIG. 5 is folded, portions of the airbag cushion 112 will be described with reference to FIG. 3 again. Based on the first belt 116a and the second belt 116b, the airbag cushion 112 may be divided into a cushion rear part 124 behind the second belt 116b, a cushion middle part 126 between the second belt 116b and the first belt 116a, and a cushion front part 128 in front of the first belt 116a.

As illustrated in FIG. 5, in the airbag cushion 112 in the storage form, the cushion middle part 126 and the cushion front part 128 in front of the second belt 116b are folded into the cushion rear part 124 behind the second belt 116b.

The cushion middle part 126 between the second belt 116b and the first belt 116a is folded to the outside of the second belt 116b in the width direction of the seatback 104. At this time, the cushion middle part 126 is folded such that all or part of the first belt 116a overlaps the outer side of the second belt 116b as viewed in the width direction of the seatback 104. Accordingly, in a state in which the airbag cushion 112 in the storage form is stored in the seat 102, the first belt 116a becomes positioned on the outer side of the second belt 116b in the width direction of the seatback 104.

Then, the cushion front part 128 in front of the first belt 116a is folded back to the outside of the first belt 116a so as to be stored inside the cushion rear part 124. These configurations enable efficient storage of the airbag cushion 112 inside the seatback 104 (see FIG. 1).

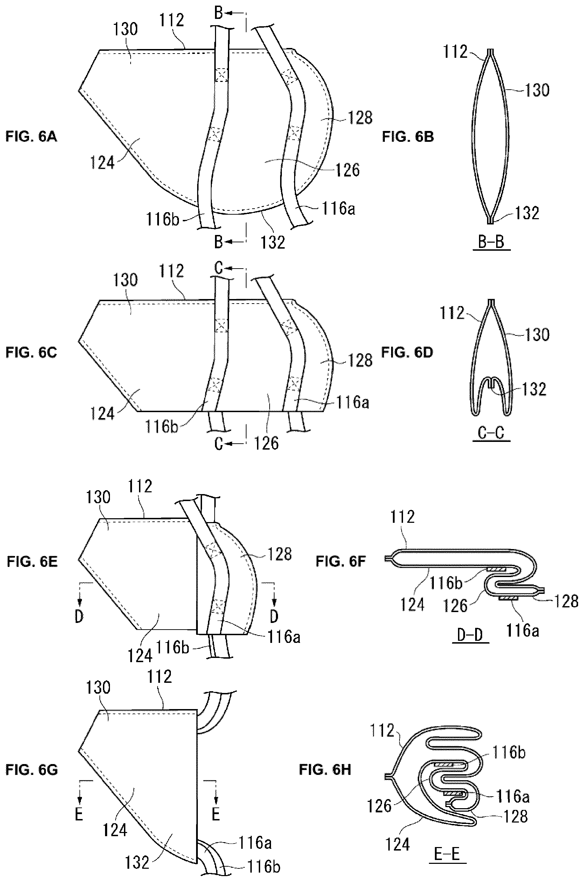

FIG. 6 is a diagram illustrating an example of a process for folding the airbag cushion 112 in the storage form in FIG. 5. FIG. 6 expresses a flow of the manufacturing method of the passenger restraining device 100 of the present embodiment.

FIG. 6(a) is a diagram illustrating the airbag cushion 112 while spread out on a flat surface. Prior to folding the airbag cushion 112, a process of connecting the first belt 116a and the second belt 116b to the panel of the airbag cushion 112 on the side opposite to the passenger is performed. The second belt 116b is connected to a portion farther behind the first belt 116a.

FIG. 6(b) is a cross-sectional view of the airbag cushion 112 in FIG. 6(a) along B-B. The airbag cushion 112 is formed in a flat bag shape into which gas flows.

FIG. 6(c) is a diagram of a bottom part 132 of the airbag cushion 112 in FIG. 6(a) being folded forward. FIG. 6(d) is a cross-sectional view of the airbag cushion 112 in FIG. 6(c) along C-C. The bottom part 132 of the airbag cushion 112 is folded backward into a top part 130. Such an operation of folding a portion of the bag-like shape backward into another part is also referred to as tucking in.

FIG. 6(e) is a diagram of the front side of the airbag cushion 112 in FIG. 6(c) being folded forward. FIG. 6(f) is a cross-sectional view of the airbag cushion 112 in FIG. 6(e) along D-D. A process of folding toward the outside of the second belt 116b in the width direction of the seatback 104 is performed on the cushion middle part 126 between the second belt 116b and the first belt 116a. As a result, the first belt 116a is positioned on the outer side of the second belt 116b in the width direction of the seatback 104. At this time, a process of overlapping all or part of the first belt 116a with the outer side of the second belt 116b as viewed from the width direction of the seatback 104 is also performed.

FIG. 6(g) is a diagram of the airbag cushion 112 in FIG. 6(e) being folded further inward. FIG. 6(h) is a cross-sectional view of the airbag cushion 112 in FIG. 6(g) along E-E. The cushion middle part 126 and the cushion front part 128 in front of the second belt 116b are folded into the cushion rear part 124 behind the second belt 116b.

Then, a process of folding back the cushion front part 128 in front of the first belt 116a to the outside of the first belt 116a is performed. Finally, part of the bottom part 132 of the airbag cushion 112 is pulled out of the inside of the cushion rear part 124 and trimmed to complete the manufacture of the airbag cushion 112 in the storage form.

According to the foregoing configuration, it is possible to realize a storage form of the airbag cushion 112 that can be efficiently stored in the seatback 104, and it is possible to manufacture a passenger restraining device 100 having high passenger restraining performance utilizing the tensions of the first belt 116a and the second belt 116b.

In the foregoing airbag cushion 112 in the storage form, when the folding of the airbag cushion 112, particularly of the cushion middle part 126, is released by the inflow of gas, the cushion middle part 126 and the cushion front part 128 move toward the passenger 103 due to the tensions of the first belts 116a and 118a (see FIG. 4) and the second belts 116b and 118b. Thus, the airbag cushion 112 manufactured by the method of manufacturing the passenger restraining device 100 can further improve the passenger restraint performance.

### Modified Example

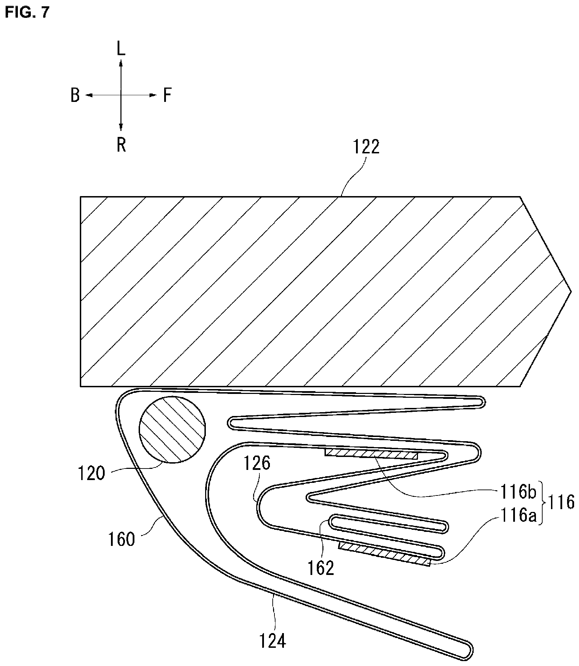

FIG. 7 is a diagram illustrating an example of a modified example (airbag cushion 160) of the airbag cushion 112 in the storage form in FIG. 5. In FIGS. 7 and on, the same symbols are given to the same constituent elements as those described above, whereby description of the aforementioned constituent elements is omitted. In the following description, components having the same name as a component already described are assumed to have the same function unless otherwise specified, even if marked with a different sign.

In the airbag cushion 160, a cushion front part 162 in front of the first belt 116a is folded into a cushion middle part 126 behind the first belt 116a. This configuration, too, enables efficient storage in the seatback and realization of an airbag cushion 160 having high passenger restraining performance.

In the manufacturing method of the passenger restraining device applying the airbag cushion 160, of the description given with reference to FIG. 6, manufacturing of the airbag cushion 160 in the storage form is completed by replacing a final process of folding back a final cushion front part 128 to the outer side of the first belt 116a with a process of folding the cushion front part 162 into the inner side of the cushion middle part 126. According to this configuration as well, it is possible to realize a storage form of the airbag cushion 160 that can be efficiently stored in the seatback 104 (see FIG. 1 and the like), and to manufacture a passenger restraining device having high passenger restraining performance utilizing the tensions of the first belt 116a and the second belt 116b.

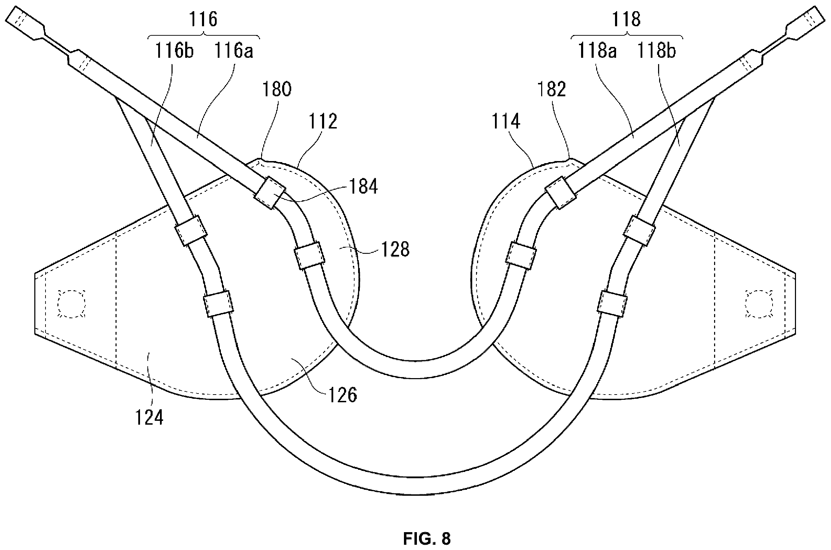

FIG. 8 is a diagram illustrating an example of a first modified example (airbag units 180 and 182) of the airbag units 108 and 110 in FIG. 3. The airbag unit 180 includes a plurality of loops 184 on the surface of the airbag cushions 112 and 114 opposite to the passenger for each belt to pass through. The loops 184 connect the first belts 116a and 118a and the second belts 116b and 118b to the airbag cushions 112 and 114 so as to be capable of sliding. This configuration prevents the airbag cushions 112 and 114 in the airbag units 180 and 182 from being pulled in an unexpected direction by the belts and enables the airbag cushions 112 and 114 to be expanded and deployed more smoothly.

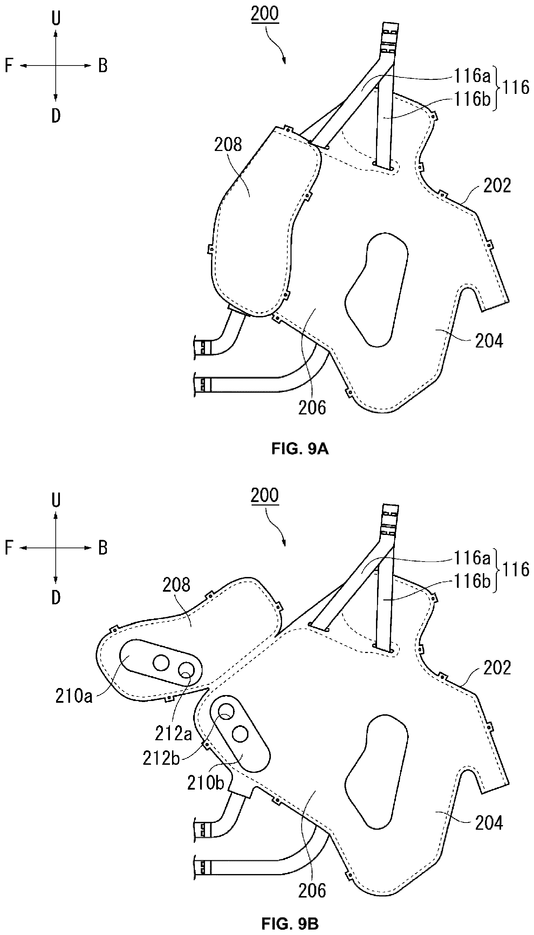

FIG. 9 is a diagram illustrating an example of a second modified example (airbag unit 200) of the airbag unit 108 in FIG. 3. FIG. 9(a) is a diagram illustrating an example of an airbag cushion 202 included in the airbag unit 200 as viewed from the passenger side. In the airbag cushion 202, an expansion region 204 expanded by gas is partitioned into a plurality of small chambers. Specifically the expansion region 204 of the airbag cushion 202 is configured including a main chamber 206 that is widely expanded and a sub-chamber 208 that expands overlapping an inner side of a front part of the main chamber 206.

The main chamber 206 is formed in a range supported by both the first belt side 116a and the second belt side 116b from the side opposite to the passenger when expanded and deployed. The sub-chamber 208 is located on the passenger side of the main chamber 206 when expanded and deployed, and is formed in a range overlapping the first belt 116a when viewed from the width direction of the seatback 104.

FIG. 9(b) is a diagram of a state in which the sub-chamber 208 of the airbag cushion 202 of FIG. 9(a) is spread out. The panel of the sub-chamber 208 on the main chamber 206 side and the panel of the main chamber 206 on the sub-chamber side are provided with joining regions 210a and 210b joined to each other by welding or the like. The joining regions 210a and 210b are provided with vent holes 212a and 212b which are connected to each other and through which a gas passes, and the gas is sent from the main chamber 206 to the sub-chamber 208 through the vent holes.

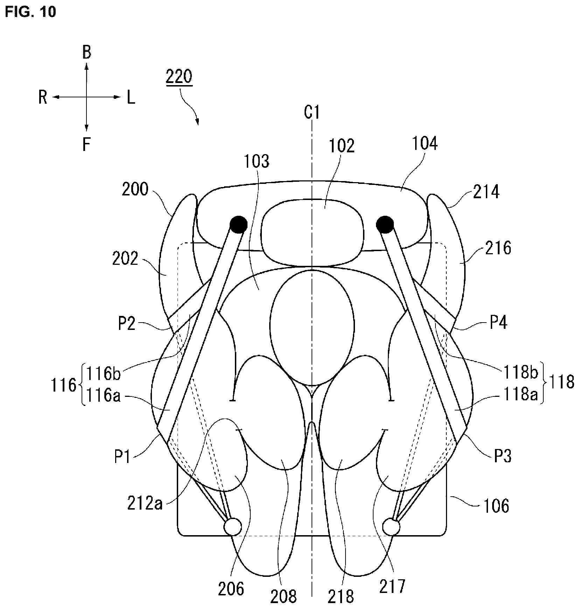

FIG. 10 is a diagram illustrating an example of a passenger restraining device 220 applying the airbag unit 200 in FIG. 9(a). FIG. 10 illustrates the passenger restraining device 220 corresponding to FIG. 4. Since the airbag cushion 202 of the airbag unit 200 and the airbag cushion 216 of the airbag unit 214 having a symmetrical configuration are increased in thickness on the front side by the sub-chambers 208 and 218, they can be expanded and deployed up to the front of the upper body of the passenger 103, and can restrain the passenger 103 from the front as well.

According to the airbag cushions 202 and 214 as well, it is possible to realize a storage form capable of being efficiently stored in the seatback 104 (see FIG. 1), and to realize the passenger restraining device 220 having high passenger restraining performance utilizing the tension of the first belts 116a and 118a and the second belts 116b and 118b.

The airbag cushions 202 and 214, by applying the folding method described with reference to FIG. 6, can also be folded and stored in the seat 102 such that the first belts 116a and 118a are positioned further outward in the width direction of the seatback 104 than the second belts 116b and 118b, respectively. According to the folding method, when the airbag cushions 202 and 214 are expanded and deployed, the tensions of the first belts 116a and 118a and the second belts 116b and 118b are used to cause the sub-chambers 208 and 218 of the airbag cushions 202 and 214 to move toward the passenger 103, enabling a high passenger restraining performance to be exhibited.

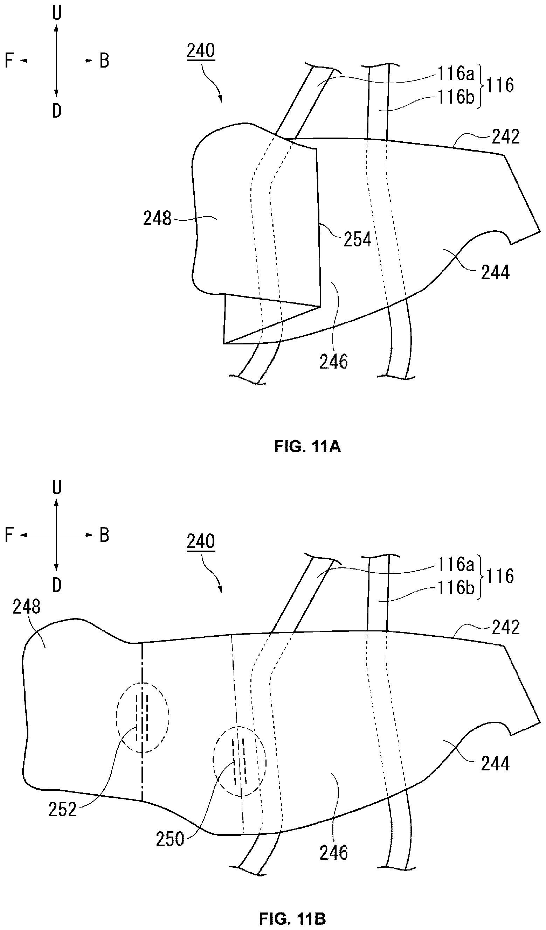

FIG. 11 is a diagram illustrating an example of a third modified example (airbag unit 240) of the airbag unit 108 of FIG. 3. FIG. 11(a) is a diagram illustrating an example of an airbag cushion 242 of the airbag unit 240 when viewed from the passenger side. The airbag cushion 242 is configured such that the expansion region 244 includes a main chamber 246 that is widely expanded and a sub-chamber 248 that expands overlapping an inner side of a front portion of the main chamber 246.

The main chamber 246 is formed in an area supported by both the first belt side 116a and the second belt side 116b from the side opposite to the passenger when expanded and deployed. The sub-chamber 248 is located on the passenger side of the main chamber 246 when expanded and deployed, and is formed in an area overlapping the first belt 116a when viewed from the width direction of the seatback 104.

FIG. 11(b) is a diagram of a state in which the sub-chamber 248 of the airbag cushion 242 of FIG. 11(a) is expanded. The sub-chamber 248 is provided with a plurality of sewn parts 250 and 252. The sewn part 250 is a region where a panel of the main chamber side of the sub-chamber 248 and a panel of the sub-chamber side of the main chamber 246 are joined by sewing. The sewn part 252 is a region in which the panels of the sides of the sub-chamber 248 opposite to the passenger are joined by sewing to form a folded-back part 254 (see FIG. 11(a)) in the sub-chamber 248.

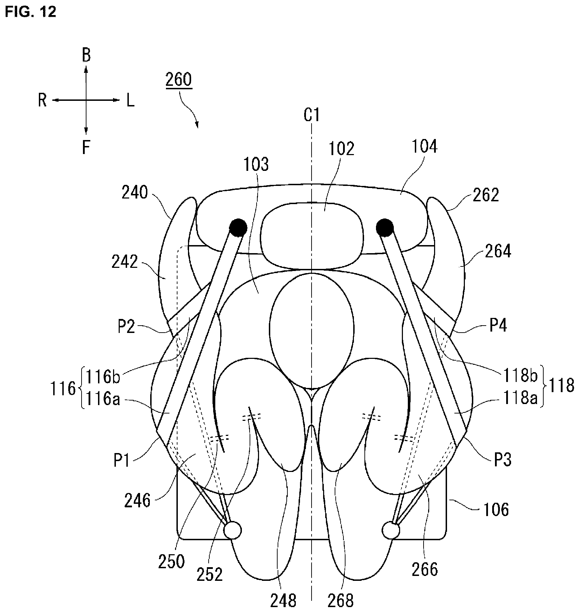

FIG. 12 is a diagram illustrating an example of a passenger restraining device 260 that uses the airbag unit 240 of FIG. 10(a). FIG. 12 illustrates an example of the passenger restraining device 260 corresponding to FIG. 4. Since the airbag cushion 242 of the airbag unit 240 and the airbag cushion 264 of the airbag unit 262 having a symmetrical configuration are increased in thickness on the front side by the sub-chambers 248 and 268, they can be expanded and deployed up to the front of the upper body of the passenger 103, and can restrain the passenger 103 from the front as well.

According to the airbag cushions 242 and 264 as well, it is possible to realize a storage form capable of being efficiently stored in the seatback 104 (see FIG. 1), and to realize a passenger restraining device 260 having high passenger restraining performance using the tensions of the first belts 116a and 118a and the second belts 116b and 118b.

The airbag cushions 242 and 264, by applying the folding method described with reference to FIG. 6, can also be folded and stored in the seat 102 such that the first belts 116a and 118a are positioned further outward in the width direction of the seatback 104 than the second belts 116b and 118b, respectively. According to the folding method, when the airbag cushions 242 and 264 are expanded and deployed, the tensions of the first belts 116a and 118a and the second belts 116b and 118b are used to cause the sub-chambers 248 and 268 of the airbag cushions 242 and 264 to move toward the passenger 103, enabling a high passenger restraining performance to be exhibited.

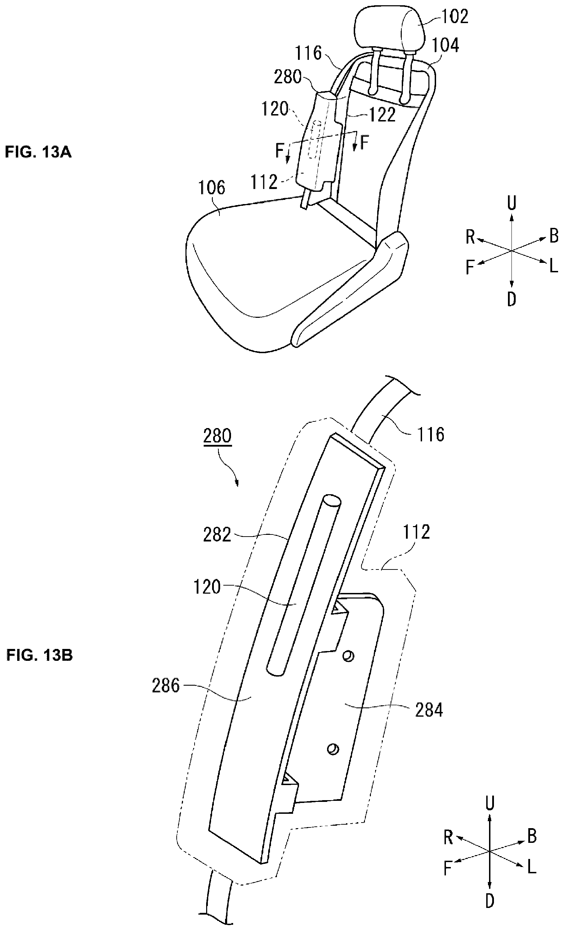

FIG. 13 is a diagram illustrating an example of a fourth modified example (airbag unit 280) of the airbag unit 108 of FIG. 1. FIG. 13(b) is a diagram illustrating an example of a state before the airbag unit 280 is activated.

FIG. 13(a) illustrates an example of only the frame 122 omitting the skin and the seat pad (for example, a urethane material) from among the seatback 104 of the seat 102. The airbag unit may also be installed on either the left or right frame 122.

FIG. 13(b) is an enlarged view of the airbag unit 280 of FIG. 13(a). The airbag unit 280 is unitized by including an airbag cushion 112, an inflator 120 and a bracket 282. The airbag unit 280 is covered or bundled by a breakable cover or tape.

The bracket 282 is a member made of resin having a certain degree of rigidity and bears a function of supporting the airbag cushion 112 at the time of expansion and deployment. The bracket 282 has a long shape along the vertical direction of the frame 122 (see FIG. 13(a)) and is installed from the inner side to the front side of the frame 122. Note that the bracket 120 may be formed including not only a resin but also a metal.

The bracket 282 has a base portion 284 disposed on an inner side of the frame 122 (see FIG. 13(a)) and a reaction force part 286 that applies a reaction force when the airbag cushion 112 expands. The base portion 184 is formed in a planar shape along the frame 122 and may be attached to the frame using a bolt, clip, pin, or the like.

The reaction force part 286 is bent from the front side of the base portion 284 and extended outward in the width direction of the seatback 104. Since the reaction force part 286 is present, the airbag cushion 122 can be efficiently expanded and deployed forward by pushing the reaction part 286. The inflator 120 is affixed to the reaction force part 286 using a stud bolt, not illustrated.

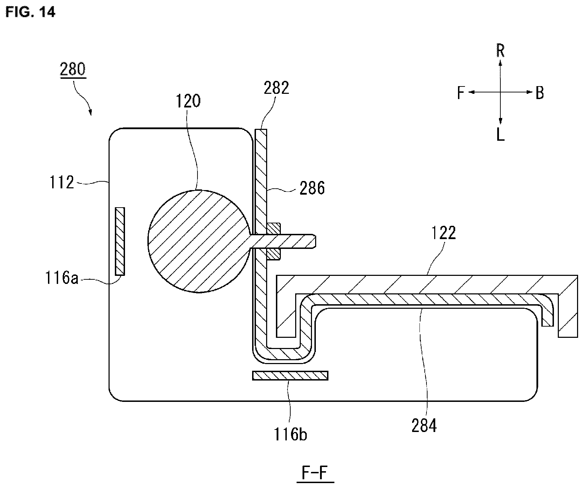

FIG. 14 is a cross-sectional view of the airbag unit 282 of FIG. 13(a) along F-F. When the airbag unit 280 is assembled on the frame 122, the inflator 120 affixed to the reaction force part 286 is in a state of being assembled on the front end of the frame 122.

In a state in which the airbag unit 280 is assembled on the frame 122, the first belt 116a is disposed so as to be located farther from the frame 122 than the second belt 116b and in front of the second belt 116b. That is, the first belt 116a is disposed so as to be positioned closer to the front surface side than the second belt 116b in the airbag cushion 112 in the storage form.

In this modified example as well, similarly to the configuration illustrated as an example in FIG. 4, when the airbag cushion 112 is expanded and deployed, the first belt 116a can be exposed from the inside of the seatback 104 (see FIG. 13(a)) ahead of the second belt 116b because the first belt 116a is disposed closer to the front surface side of the airbag unit 280 than the second belt 116b. Then, the first belt 116a moves quickly to a position separated farther forward from the frame 122 than the second belt 116b, and can suitably support the airbag cushion 112.

Although each airbag cushion is provided with a belt member in the embodiments described above, it is also possible to provide only one of the two airbag cushions with a belt member. Furthermore, the present invention is not limited to a configuration in which an airbag cushion is provided at both ends in the width direction of the seatback 104, and a configuration in which an airbag cushion is provided only at one end side in the width direction of the seatback 104 can also be implemented.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts illustrated in detail in the attached drawings. Furthermore, expressions and terms used in the specification of the present application are used for providing a description, and the invention is not limited thereto, unless specifically described otherwise.

Therefore, it is obvious that a person with ordinary skill in the art can conceive various changed examples or modified examples within the scope described in the scope of the claims, which is understood to naturally belong to the technical scope of the present invention.

### INDUSTRIAL APPLICABILITY

The present invention can be used in a passenger restraining device for restraining a passenger seated in a seat of a vehicle.

### EXPLANATION OF CODES

100...Passenger restraining device, 102...Seat, 103...Passenger, 104...Seatback, 106...Seat cushion, 108...Airbag unit, 112...Airbag cushion, 116...Belt member, 116a...First belt, 116b...Second belt, 120...Inflator, 122... Frame, 124...Cushion rear part, 126...Cushion middle part, 128...Cushion front part, 130...Top part, 132...Bottom part, P1...Outermost portion of the first belt, P2...Outermost portion of the second belt, P3...Outermost portion of the first belt, P4...Outermost portion of the second belt, 160...Airbag cushion, 162...Cushion front part, 180...Airbag unit, 184...Loop, 200...Airbag unit, 202...Airbag cushion, 204...Expansion region, 206...Main chamber, 208...Sub-chamber, 212a...Vent hole, 214...Airbag unit, 216...Airbag cushion, 217...Main chamber, 218...Sub-chamber, 220...Passenger restraining device, 240...Airbag unit, 242...Airbag cushion, 244...Expansion region, 246...Main chamber, 248...Sub-chamber, 250...Sewn part, 252...Sewn part, 254...Folded-back part, 260...Passenger restraining device, 262...Airbag unit, 264...Airbag cushion, 266...Main Chamber, 268...Sub-chamber, 280...Airbag unit, 282...Bracket, 284...Base portion, 286...Reaction force part

## Claims

1. A passenger restraining device for restraining a passenger seated on a seat of a vehicle,
comprising:
an airbag cushion that has a bag shape, is assembled on a frame on at least one end side in a width direction of a seatback of the seat in a rolled or folded predetermined storage form, and is expanded and deployed in front of the seated passenger;
an inflator assembled on the frame together with the airbag cushion having at least a portion inserted into the airbag cushion; and
a first belt and a second belt connected to a side of the airbag cushion opposite to the passenger and stored from the inside of the seatback to the inside of the seat cushion, wherein
the second belt is disposed so as to be positioned behind the first belt on the surface on the opposite side of the airbag cushion when the airbag cushion is expanded and deployed, and
in a state where the airbag cushion in the storage form is assembled on the frame, the first belt is disposed so as to be located farther from the frame than the second belt.

2. The passenger restraining device according to claim 1, wherein when the inflator is assembled on the outer side of the frame in the width direction, the first belt is disposed so as to be positioned further to the outside in the width direction than the second belt.

3. The passenger restraining device according to claim 1 or 2, wherein when the inflator is assembled on the front end of the frame, the first belt is disposed so as to be positioned in front of the second belt.

4. The passenger restraining device according to any one of claims 1 to 3, wherein the airbag cushion is installed respectively on one end side and another end side in the width direction of the seatback.

5. The passenger restraining device according to any one of claims 1 to 4, wherein the airbag cushion in the storage form has a portion in front of the first belt of the airbag cushion folded back to an outer side of the first belt.

6. The passenger restraining device according to any one of claims 1 to 4, wherein the airbag cushion in the storage form has a portion in front of the first belt of the airbag cushion folded in to an inside of the portion behind the first belt.

7. The passenger restraining device according to any one of claims 1 to 6, wherein the airbag cushion in the storage form has a portion between the second belt and the first belt of the airbag cushion folded to an outer side of the second belt in the width direction of the seatback.

8. The passenger restraining device according to claim 7, wherein the airbag cushion in the storage form, when viewed from the width direction of the seatback, has the first belt entirely or partially overlapping the second belt.

9. The passenger restraining device according to any one of claims 1 to 8, wherein the airbag cushion in the storage form has a portion in front of the second belt folded in to an inside of a portion behind the second belt.

10. The passenger restraining device according to any one of claims 1 to 9, wherein the first belt and the second belt are connected to the airbag cushion so as to be capable of sliding.

11. The passenger restraining device according to any one of claims 1 to 10, wherein the airbag cushion comprises:
a main chamber supported from the opposite side to the passenger by both the first belt and the second belt when expanded and deployed, and
a sub-chamber positioned on the passenger side of the main chamber when expanded and deployed and, when seen from a width direction of the seatback, overlaps the first belt.

12. The passenger restraining device according to claim 11, wherein the airbag cushion has a sewn part that joins a panel of the main chamber and a panel of the sub-chamber.

13. A method for manufacturing a passenger restraining device for restraining an passenger seated on a seatback of a vehicle by an airbag cushion which has a bag shape, is stored in at least one end side in the width direction of the seatback in a rolled or folded predetermined storage form, and is expanded and deployed up to the front of the passenger seated in the seat, wherein the method comprises:
a process for connecting a first belt and a second belt stored the inside of the seatback to inside the seat cushion to the side of the airbag cushion opposite to the passenger, thereupon connecting the second belt to a location rearward of the first belt, and by the connection, positioning the first belt further outward than the second belt in the width direction of the seatback;
a process for folding a portion of the airbag cushion between the second belt and the first belt to the outside of the second belt in the width direction of the seatback;
a process for folding the portion of the airbag cushion in front of the first belt to an outer side of the first belt, or a process for folding the portion in front to the inside of the portion behind the first belt,
a process for overlapping an entirety or a portion of the first belt on the second belt seen from the width direction of the seatback, and
a process for folding a portion of the airbag cushion in front of the second belt in to an inside of a portion behind the second belt.
